# EUROPÄISCHE PATENTSCHRIFT

(11) **EP 2 585 244 B1**
(45) Veröffentlichungstag und Bekanntmachung des Hinweises auf die Patenterteilung: **05.08.2020**
(21) Anmeldenummer: 11720795.1
(22) Anmeldetag: 24.05.2011
(51) Int. Cl.: B23H 5/06, B23H 9/10, F02M 59/44, B23H 9/00, B23H 3/00

(54) **VERFAHREN ZUR HERSTELLUNG EINES METALLISCHEN BAUTEILS FÜR HOCHDRUCKANWENDUNGEN**
METHOD FOR MANUFACTURING A METALLIC COMPONENT FOR HIGH-PRESSURE APPLICATIONS
MÉTHODE DE FABRICATION D'UN ÉLÉMENT MÉTALLIQUE POUR DES APPLICATIONS HAUTE PRESSION

(30) Priorität: 28.06.2010 DE 102010030586
(43) Veröffentlichungstag der Anmeldung: 01.05.2013
(73) Patentinhaber: Robert Bosch GmbH, 70442 Stuttgart (DE)
(72) Erfinder: GENTE, Arnold, 70469 Stuttgart (DE); BURGER, Chris, 71292 Friolzheim (DE)
(86) Internationale Anmeldenummer: PCT/EP2011/058403
(87) Internationale Veröffentlichungsnummer: WO 2012/000720

(56) Entgegenhaltungen:
- WO-A1-95/12478
- WO-A2-2006/131741
- DE-A1-102004 028 999

## Beschreibung

### Stand der Technik

Die Erfindung betrifft ein Verfahren zur Herstellung eines metallischen Bauteils für Hochdruckanwendungen.

Ein derartiges Verfahren ist aus WO95/12478A1 bekannt.

Aus der DE 10 2004 028 999 A1 ist eine Hochdruckpumpe für eine Kraftstoffeinspritzeinrichtung einer Brennkraftmaschine bekannt. Die bekannte Hochdruckpumpe weist ein Pumpenelement auf, das einen in einer Hubbewegung angetriebenen, in einer Zylinderbohrung eines Pumpengehäuseteils verschiebbar geführten Pumpenkolben aufweist, der in der Zylinderbohrung einen Pumpenarbeitsraum begrenzt. Der Pumpenarbeitsraum ist über ein Saugventil beim Saughub des Pumpenkolbens mit Kraftstoff befüllbar. Der Pumpenarbeitsraum weist außerdem über einen im Pumpengehäuse verlaufenden Kraftstoffablaufkanal eine Verbindung mit einem Auslass auf, der beispielsweise mit einem Hochdruckspeicher verbunden ist. An der Mündung des Kraftstoffablaufkanals in den Pumpenarbeitsraum ist ein aus dem Pumpenarbeitsraum öffnendes Auslassventil angeordnet.

Die aus der DE 10 2004 028 999 A1 bekannte Hochdruckpumpe hat den Nachteil, dass die Hochdruckfestigkeit der Hochdruckpumpe speziell im Bereich der Mündung des Kraftstoffablaufkanals in den Pumpenarbeitsraum an dieser Stelle begrenzt ist, wodurch ein Bereich für den zulässigen Innendruck und somit auch der maximale Förderdruck begrenzt sind.

### Offenbarung der Erfindung

Das erfindungsgemäße Verfahren mit den Merkmalen des Anspruchs 1 hat den Vorteil, dass eine Hochdruckfestigkeit des hergestellten metallischen Bauteils verbessert ist. Speziell kann die Hochdruckfestigkeit an geometrisch ungünstigen Stellen verbessert werden, so dass lokale Spannungsspitzen im Bauteil begrenzt sind. Hierdurch kann der Bereich für den zulässigen Innendruck vergrößert werden, wodurch eine Haltbarkeit verbessert ist und/oder der maximal erreichbare Förderdruck erhöht ist.

Durch die in den Unteransprüchen aufgeführten Maßnahmen sind vorteilhafte Weiterbildungen des im Anspruch 1 angegebenen Verfahrens möglich.

Durch elektrochemisches Abtragen (ECM) kann die Hochdruckfestigkeit im gehärteten Zustand gesteigert werden. Das elektrochemische Abtragen ist ein abtragendes Fertigungsverfahren, mit dem auch komplizierte räumliche Formen ausgestaltet werden können. Das elektrochemische Abtragen kann mit einer Präzision im Mikrometerbereich durchgeführt werden. Bei dem elektrochemischen Abtragen ist kein Kontakt zwischen dem Werkzeug und dem Werkstück, das heißt dem metallischen Bauteil, erforderlich. Da keine mechanischen Kräfte übertragen werden, sind die Werkstoffeigenschaften Härte, Zähigkeit und dergleichen für die Durchführung von untergeordneter Bedeutung. Beispielsweise kann das Werkstück als Anode und das Werkzeug als Kathode polarisiert sein, wobei die Form der Werkzeugkathode die Form des Werkstückes vorgibt. Zwischen Werkzeug und Werkstück wird ein Arbeitsspalt eingestellt. Den Ladungstransport im Ladungsspalt übernimmt eine Elektrolytlösung.

Durch die Nachbehandlung des Verschneidungsbereichs kann in vorteilhafter Weise eine Begrenzung der auftretenden lokalen mechanischen Spannungsspitzen erreicht werden. Dies kann beispielsweise durch ein Verrunden von Kanten und/oder durch ein Einbringen von Konturen mit gleichmäßigen Übergängen erreicht werden. Die Ausgestaltung einer Kantenverrundung oder einer solchen Kontur erfolgt mittels des elektrochemischen Abtragens.

Die Durchführung des elektrochemischen Abtragens nach der Härtung hat mehrere Vorteile. Das Werkstoffgefüge ist nach der Wärmebehandlung in der Regel feinkörniger, so dass bei dem elektrochemischen Abtragen bessere Oberflächenqualitäten erreicht werden als vor der Wärmebehandlung. Die beim elektrochemischen Abtragen im weichen Zustand erzielbaren guten Oberflächenqualitäten werden durch eine Kornneuorientierung bei der Wärmebehandlung wieder verschlechtert, was somit von vornherein verhindert ist. Außerdem werden Einflüsse aus der Wärmebehandlung auf die Oberfläche der durch elektrochemisches Abtragen bearbeiteten Bereiche vermieden, beispielsweise eine Randoxidation beim Bainitisieren im Salzbad. Ferner wird eine Randoxidaktionsschicht auf höchst belasteten Bereichen, die durch ständige Innendruckschwellbeanspruchung abplatzen kann, vermieden.

Das elektrochemische Abtragen im gehärteten Zustand bringt jedoch Probleme mit sich, die in vorteilhafter Weise gelöst werden können. Ein Problem ist, dass bei einsatzvorgehärteten Stählen durch das elektrochemische Abtragen die einsatzgehärtete Randschicht wieder abgetragen wird, so dass keine Zone mehr im Bereich der elektrochemischen Abtragung besteht. Ein weiteres Problem ist, dass bei durchgehärteten Werkstoffen, wie beispielsweise 100Cr6, mit bainitischer Wärmebehandlung eine verschlechterte Oberflächenqualität durch die Randoxidationsschicht aus der Wärmebehandlung in den Randbereichen der nachfolgenden Bearbeitung durch elektrochemisches Abtragen besteht. Dieser Effekt lässt sich so erklären, dass die Randoxidationsschicht schlecht leitend ist. In Randbereichen der Bearbeitung durch elektrochemisches Abtragen ist die Stromdichte für das elektrochemische Abtragen so gering, dass diese nur an lokalen Schwachstellen die Randoxidationsschicht löst. An diesen Stellen greift dann der Prozess des elektrochemischen Abtragens stärker an, als an den Stellen mit noch aufhaftender Schicht. Dadurch können sich beispielsweise steilküstenartige Strukturen am Auslauf des Bearbeitungsbereichs für das elektrochemische Abtragen ausbilden, welche eine schlechte Oberflächenqualität besitzen. Es hat sich gezeigt, dass dieser Übergangsbereich mit schlechter Oberflächenqualität im Hochdruckpulsversuch eine wahrscheinliche Bruchstelle des Zylinderkopfes darstellt. Bei einem diesbezüglichen Bruch des Zylinderkopfes hat sich gezeigt, dass sich der Bruchausgang in der Regel am rauhen Übergangsbereich zur Randoxidation der Wärmebehandlung befindet. Im Unterschied dazu befindet sich bei Pulsversuchen mit einer Bearbeitung durch elektrochemisches Abtragen im weichen Zustand der Bruchausgang in der Regel im Kernbereich des elektrochemischen Abtragens, welcher auch der spannungstechnisch kritischste Bereich ist.

Auf Grund des Ergebnisses der durchgeführten Untersuchung, dass im Pulsversuch mit elektrochemischem Abtragen im harten Zustand die gebrochenen Bauteile an der Übergangszone zur unbeeinflussten Randoxidation ihre Bruchursache haben und kein Bruch im Kernbereich des elektrochemischen Abtragens auftritt, ist die Steigerung der Hochdruckfestigkeit durch elektrochemisches Abtragen im harten Zustand im Kernbereich des elektrochemischen Abtragens nachgewiesen. Ebenso ist die Bedeutung des Übergangsbereichs zwischen dem elektrochemischen Abtragen, das im harten Zustand durchgeführt wird, und der unbeeinflussten Randoxidation in der anschließenden Bohrung nachgewiesen. Um allerdings die Hochdruckfestigkeit des gesamten Bauteils zu steigern, muss noch zusätzlich die Hochdruckfestigkeit dieses Übergangsbereichs optimiert werden. Hierbei kann speziell die Hochdruckfestigkeit von Bauteilen für die Dieseleinspritztechnik gesteigert werden.

Die Steigerung der Hochdruckfestigkeit erfolgt durch die Kombination des elektrochemischen Abtragens im harten Zustand (ECM hart) mit der Entfernung der Randoxidation und Einglättung des Übergangsbereichs vorzugsweise durch einen Honprozess der an den ECM-Bereich angrenzenden Bohrung beziehungsweise Bohrungen. Vorzugsweise bezieht sich dies auf ein hochdruckbelastetes Bauteil aus einem durchgehärteten Werkstoff mit Oxidationsschicht auf der Oberfläche, wobei die Durchhärtung vorzugsweise bainitisch im Salzbad erfolgt.

Bei einer Ausgestaltung mit einer gehonten Bohrung oder dergleichen kann der Honprozess in vorteilhaft Weise vor dem elektrochemischen Abtragen im harten Zustand die Randoxidation entfernen, um keine Übergangszone entstehen zu lassen. Möglich ist es auch, dass der Honprozess anschließend an den Prozess des elektrochemischen Abtragens im harten Zustand durchgeführt wird, um den Übergangsbereich wieder glatt zu honen.

Somit kann durch das elektrochemische Abtragen im harten Zustand in Kombination mit einem Honprozess die Übergangszone zwischen dem Bereich des elektrochemischen Abtragens und der Randoxidationsschicht optimiert werden. Im Ergebnis kann eine erhebliche Festigkeitssteigerung und somit eine Auslegung in Bezug auf erheblich höhere Drücke erzielt werden. Speziell kann eine Belastbarkeit in Bezug auf zulässige Innendrücke von mehr als 220 MPa (2200 bar) erzielt werden.

Somit kann in vorteilhafter Weise ein mechanisches Abtragen vor dem elektrochemischen Abtragen im Verschneidungsbereich ausgeführt sein, wobei das mechanische Abtragen so ausgeführt ist, dass eine durch die Härtung gebildete Randschicht zumindest bereichsweise zumindest teilweise abgetragen ist. Vorzugsweise alternativ, gegebenenfalls aber auch zusätzlich, kann in vorteilhafter Weise ein mechanisches Abtragen nach dem elektrochemischen Abtragen im Verschneidungsbereich ausgeführt sein, wobei eine durch das elektrochemische Abtragen gebildete Rauhigkeit zumindest bereichsweise reduziert ist. Das mechanische Abtragen kann vor dem elektrochemischen Abtragen die Randoxidation entfernen, um keine Übergangszone entstehen zu lassen, oder anschließend an das elektrochemische Abtragen ausgeführt werden, um den Übergangsbereich wieder zu glätten.

Vorteilhaft ist es auch, dass der Verschneidungsbereich durch das elektrochemische Abtragen verrundet ist, dass zumindest ein Übergangsbereich an dem Rand des Verschneidungsbereichs vorgesehen ist und dass das mechanische Abtragen zumindest im Wesentlichen im Übergangsbereich erfolgt. Somit kann die Hochdruckfestigkeit im Übergangsbereich zur unbeeinflussten Randoxidation verbessert werden. Außerdem wird durch die Verrundung des Verschneidungsbereichs das Auftreten von Spannungsspitzen begrenzt. Somit ergibt sich insgesamt eine hohe Belastbarkeit des verrundeten Verschneidungsbereichs einschließlich seiner Ränder.

Vorzugsweise wird durch das elektrochemische Abtragen ein zumindest teilweise trompetenförmiger Verschneidungsbereich ausgestaltet. Dadurch kann in vorteilhafter Weise eine Verrundung zwischen einer Bohrung mit großem Durchmesser und einer Bohrung mit kleinem Durchmesser ausgestaltet sein, wobei sich eine vorteilhafte Reduzierung von mechanischen Spannungsspitzen erzielen lässt.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein metallisches Bauteil in einer schematischen, axialen Schnittdarstellung und
Fig. 2 den in Fig. 1 mit II bezeichneten Ausschnitt des metallischen Bauteils in einer detaillierten Darstellung.

### Ausführungsformen der Erfindung

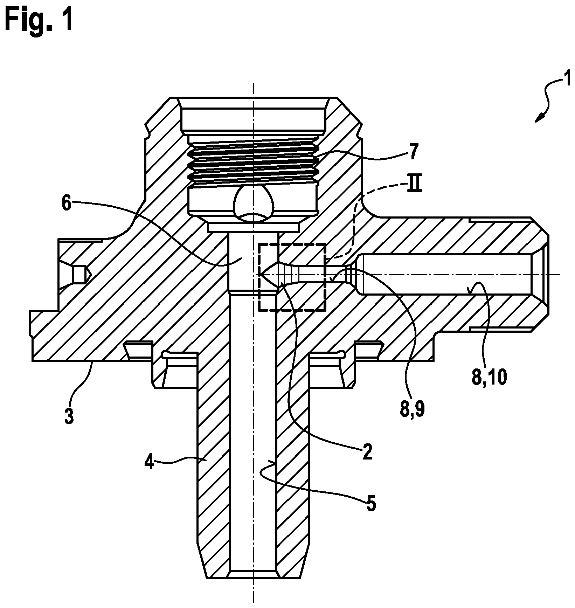

Fig. 1 zeigt ein metallisches Bauteil 1 in einer schematischen, axialen Schnittdarstellung entsprechend einem Ausführungsbeispiel der Erfindung. Das metallische Bauteil 1 ist in diesem Ausführungsbeispiel als Zylinderkopf für eine Hochdruckpumpe ausgestaltet. Das metallische Bauteil 1 weist einen Verschneidungsbereich 2 auf. Die Ausgestaltung des Verschneidungsbereichs 2 kann allerdings auch in entsprechender Weise bei anderen metallischen Bauteilen realisiert werden, die insbesondere als Brennstoffverteilerleiste oder als Bauteil für einen Injektor ausgestaltet sind. Solch ein metallisches Bauteil eignet sich besonders für Brennstoffeinspritzanlagen von luftverdichtenden, selbstzündenden Brennkraftmaschinen, da in den diesbezüglichen Komponenten eine Beanspruchung durch hohe Innendrücke auftritt. Das metallische Bauteil 1 eignet sich jedoch auch für andere Anwendungsfälle.

Das metallische Bauteil 1 weist eine Seite 3 auf. Im Bereich der Seite 3 weist das metallische Bauteil 1 einen Ansatz 4 auf. Das als Zylinderkopf 1 ausgestaltete metallische Bauteil 1 kann an eine Hochdruckpumpe montiert werden, wobei die Seite 3 an einer Außenseite der Hochdruckpumpe anliegt. Der Ansatz 4 erstreckt sich dann in eine Bohrung eines Pumpengehäuses der Hochdruckpumpe. Der Zylinderkopf 1 weist eine Bohrung 5 auf, die sich durch den Ansatz 4 erstreckt. Ein Teil 6 der Bohrung 5 dient hierbei als Pumpenarbeitsraum 6. In der Bohrung 5 ist im montierten Zustand ein Pumpenkolben angeordnet, der auf geeignete Weise von einem Nocken einer Antriebswelle angetrieben ist.

Ferner weist der Zylinderkopf 1 ein Innengewinde 7 auf, in das ein Einlassventil, eine Zumesseinheit oder dergleichen einschraubbar ist. Über solch ein Einlassventil kann während des Betriebs Brennstoff in den Pumpenarbeitsraum 6 geführt werden. Außerdem weist der Zylinderkopf 1 eine Stufenbohrung 8 mit einem Abschnitt 9 und einem Abschnitt 10 mit großem Durchmesser auf. In den Abschnitt 10 kann beispielsweise ein Auslassventil eingebracht sein. Der Abschnitt 9 mündet in die Stufenbohrung 8. Der Mündungsbereich ist hierbei durch den Verschneidungsbereich 2 gegeben.

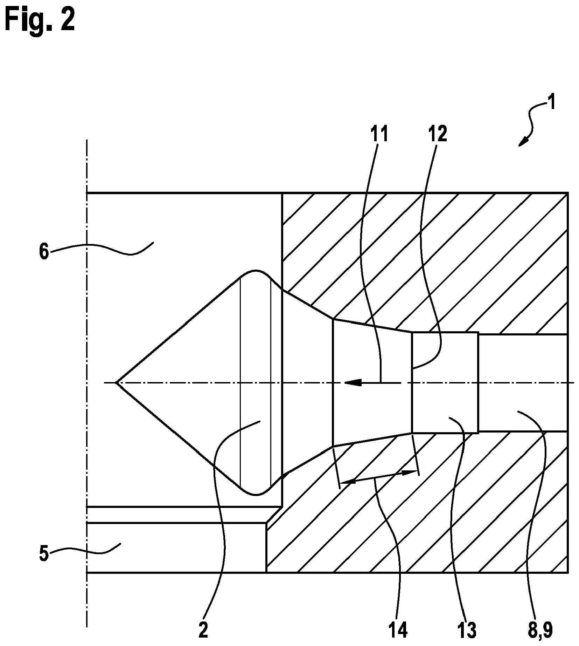

Die Ausgestaltung des Verschneidungsbereichs 2 ist im Folgenden auch unter Bezugnahme auf die Fig. 2 beschrieben.

Fig. 2 zeigt den in Fig. 1 mit II bezeichneten Ausschnitt des Zylinderkopfs 1 in einer schematischen Darstellung.

Bei der Herstellung des Zylinderkopfs 1 wird das Werkstück mit den Bohrungen 5, 8 zunächst gehärtet. Hierbei erfolgt vorzugsweise eine Durchhärtung des gesamten Werkstücks. Die Durchhärtung erfolgt vorzugsweise bainitisch im Salzbad. Hierdurch bildet sich auf der Oberfläche des durchgehärteten Werkstücks eine Oxidaktionsschicht. Diese bildet sich insbesondere an den Bohrungen 5, 8. Anschließend wird der Verschneidungsbereich 2 nachbearbeitet. Bei dieser Nachbearbeitung erfolgt zumindest ein elektrochemisches Abtragen und zumindest ein mechanisches Abtragen. Somit werden zumindest zwei Bearbeitungsschritte beim Nachbearbeiten ausgeführt. Möglich ist es allerdings auch, dass mehr als zwei Schritte beim Nachbearbeiten des Verschneidungsbereichs 2 ausgeführt werden. Insbesondere kann sowohl vor als auch nach dem elektrochemischen Abtragen jeweils ein mechanisches Abtragen ausgeführt werden.

Der Bearbeitungsschritt des mechanischen Abtragens umfasst zumindest einen Honprozess. Solch ein Honprozess kann entweder vor dem elektrochemischen Abtragen die Oxidationsschicht entfernen, um keine Übergangszone entstehen zu lassen, oder anschließend an das elektrochemische Abtragen erfolgen, um den Übergangsbereich wieder glatt zu honen.

Das elektrochemische Abtragen dient zum Verrunden der Kanten im Verschneidungsbereich 2. In diesem Ausführungsbeispiel wird das elektrochemische Abtragen so ausgeführt, dass sich der Verschneidungsbereich 2 in einer Richtung 11 zu der Bohrung 5 hin zunehmend erweitert. Hierdurch weist der nachbearbeitete Verschneidungsbereich 2 eine trompetenförmige Ausgestaltung auf.

Nach dem elektrochemischen Abtragen grenzt der Verschneidungsbereich 2 an seinem Rand 12 an einen zumindest im Wesentlichen unbearbeiteten Abschnitt 13 der Bohrung 8 an. An diesem Rand 12 ist ein Übergangsbereich 14 gebildet. Da die Durchführung des elektrochemischen Abtragens insbesondere durch die Form des Werkzeugs die gewünschte Ausgestaltung des Verschneidungsbereichs 2 nach dem elektrochemischen Abtragen vorgibt, ist der Rand 12 und somit auch der Übergangsbereich 14 von vornherein zumindest näherungsweise bestimmt.

Wenn das mechanische Abtragen, insbesondere der Honprozess, vor dem elektrochemischen Abtragen ausgeführt wird, dann wird die Oxidationsschicht der Stufenbohrung 8 von der Bohrung 5 aus bis zu dem Abschnitt 13 entfernt. Hierdurch wird bei der Durchführung des nachfolgenden elektrochemischen Abtragens die Ausbildung einer Übergangszone mit steilküstenartiger Struktur im Übergangsbereich 14 verhindert. Durch die entfernte Oxidationsschicht wird nämlich eine ungünstige Beeinflussung des elektrochemischen Abtragens vermieden.

Wenn das mechanische Abtragen nach dem elektrochemischen Abtragen durchgeführt wird, dann erfolgt dieses speziell im Übergangsbereich 14, um eine beim elektrochemischen Abtragen entstandene Rauhigkeit des Übergangsbereichs 14 zu reduzieren. Hierbei kann eine steilküstenartige Struktur im Übergangsbereich 14, die durch das elektrochemische Abtragen entstanden ist, entfernt werden.

Wenn das mechanische Abtragen somit vor dem elektrochemischen Abtragen im Verschneidungsbereich 2 ausgeführt wird, dann erfolgt das mechanische Abtragen so, dass eine durch die Härtung gebildete Randschicht, insbesondere Randoxidationsschicht der Oberfläche der Bohrung 8, zumindest im Übergangsbereich 14 abgetragen wird.

Wenn das mechanische Abtragen hingegen nach dem elektrochemischen Abtragen im Verschneidungsbereich 2 ausgeführt wird, dann wird eine durch das elektrochemische Abtragen entstandene Rauhigkeit zumindest im Übergangsbereich 14 wieder reduziert.

Somit kann durch das elektrochemische Abtragen im Wesentlichen eine Verrundung des Verschneidungsbereichs 2 erfolgen, während durch das mechanische Abtragen im Wesentlichen eine Bearbeitung des Übergangsbereichs 14 erfolgt.

Durch den Honprozess kann im Übergangsbereich 14 ein charakteristischer Kreuzschliff im Auslaufbereich der ECM-Bearbeitung entstehen. Speziell kann solch ein Kreuzschliff zumindest teilweise im Übergangsbereich 14 und im Abschnitt 13 gebildet sein.

Je nach Ausgestaltung des metallischen Bauteils 1 können auch weitere Verschneidungsbereiche auf diese Weise nachbearbeitet werden. In vorteilhafter Weise kann ein Verschneidungsbereich 2 zwischen zwei aufeinander treffenden Bohrungen 5, 8 verrundet werden. Allerdings kann auch ein Verschneidungsbereich verrundet und nachbearbeitet werden, der zwischen auf andere Weise ausgestalteten Konturen ausgebildet ist.

Die Erfindung ist nicht auf die beschriebenen Ausführungsbeispiele beschränkt.

## Patentansprüche

1. Verfahren zur Herstellung eines metallischen Bauteils (1) für Hochdruckanwendungen, insbesondere für Brennstoffeinspritzanlagen von luftverdichtenden, selbstzündenden Brennkraftmaschinen, mit zumindest einem Verschneidungsbereich (2), wobei der Verschneidungsbereich (2) nach einer Härtung durch zumindest ein elektrochemisches Abtragen und zumindest ein mechanisches Abtragen nachbearbeitet wird, **dadurch gekennzeichnet, dass** ein mechanisches Abtragen vor dem elektrochemischen Abtragen im Verschneidungsbereich (2) ausgeführt wird und dass das mechanische Abtragen so ausgeführt wird, dass eine durch die Härtung gebildete Randschicht zumindest bereichsweise zumindest teilweise abgetragen wird, und/oder dass ein mechanisches Abtragen nach dem elektrochemischen Abtragen im Verschneidungsbereich (2) ausgeführt wird und dass eine durch das elektrochemische Abtragen gebildete Rauigkeit zumindest bereichsweise reduziert wird.

2. Verfahren nach Anspruch 1,
**dadurch gekennzeichnet,**
**dass** der Verschneidungsbereich (2) durch das elektrochemische Abtragen verrundet wird, dass zumindest ein Übergangsbereich (14) an dem Rand (12) des Verschneidungsbereichs (2) vorgesehen ist und dass das mechanische Abtragen zumindest im Wesentlichen im Übergangsbereich (14) erfolgt.

3. Verfahren nach Anspruch 1 oder 2,
**dadurch gekennzeichnet,**
**dass** das mechanische Abtragen zumindest teilweise mittels Honen erfolgt.

4. Verfahren nach einem der Ansprüche 1 bis 3,
**dadurch gekennzeichnet,**
**dass** das Härten zumindest teilweise durch eine bainitische Wärmebehandlung erfolgt.

5. Verfahren nach Anspruch 4,
**dadurch gekennzeichnet,**
**dass** das metallische Bauteil aus einem Werkstoff gebildet wird, der durch das Härten durchgehärtet wird.

6. Verfahren nach einem der Ansprüche 1 bis 5,
**dadurch gekennzeichnet,**
**dass** das metallische Bauteil als Zylinderkopf für eine Hochdruckpumpe oder als Bauteil für eine Brennstoffverteilerleiste oder als Bauteil für einen Injektor ausgestaltet wird.

7. Verfahren nach einem der Ansprüche 1 bis 6,
**dadurch gekennzeichnet,**
**dass** als Verschneidungsbereich (2) ein Verschneidungsbereich (2) einer Bohrungsverschneidung gebildet wird.

8. Verfahren nach einem Ansprüche 1 bis 7,
**dadurch gekennzeichnet,**
**dass** durch das elektrochemische Abtragen ein zumindest teilweise trompetenförmiger Verschneidungsbereich (2) ausgestaltet wird.

## Claims

1. Method for producing a metallic component (1) for high-pressure applications, in particular for fuel injection systems of air-compressing, auto-ignition internal combustion engines, having at least one intersection region (2), wherein, after a hardening process, the intersection region (2) is reworked by means of at least one electrochemical material removal process and at least one mechanical material removal process, **characterized in that** a mechanical material removal process is performed before the electrochemical material removal process in the intersection region (2), and **in that** the mechanical material removal process is performed such that a boundary layer formed as a result of the hardening is at least regionally at least partially removed, and/or **in that** a mechanical material removal process is performed after the electrochemical material removal process in the intersection region (2), and **in that** a roughness formed as a result of the electrochemical material removal process is at least regionally reduced.

2. Method according to Claim 1,
**characterized**
**in that** the intersection region (2) is rounded as a result of the electrochemical material removal process, in that at least one transition region (14) is provided at the edge (12) of the intersection region (2), and in that the mechanical material removal process is performed at least substantially in the transition region (14).

3. Method according to Claim 1 or 2,
**characterized**
**in that** the mechanical material removal process is performed at least partially by means of honing.

4. Method according to any of Claims 1 to 3, **characterized**
**in that** the hardening is performed at least partially by means of a bainitic heat treatment process.

5. Method according to Claim 4,
**characterized**
**in that** the metallic component is formed from a material which is through-hardened as a result of the hardening process.

6. Method according to any of Claims 1 to 5, **characterized**
**in that** the metallic component is configured as a cylinder head for a high-pressure pump or as a component for a fuel distributor rail or as a component for an injector.

7. Method according to any of Claims 1 to 6, **characterized**
**in that**, as intersection region (2), an intersection region (2) of a bore intersection is formed.

8. Method according to any of Claims 1 to 7, **characterized**
**in that** an at least partially trumpet-shaped intersection region (2) is formed as a result of the electrochemical material removal process.

## Revendications

1. Procédé de fabrication d'un composant métallique (1) pour des applications haute pression, en particulier pour des systèmes d'injection de carburant de moteurs à combustion interne à compression d'air et à autoallumage, comprenant au moins une zone d'intersection (2), la zone d'intersection (2) étant réusinée après un durcissement par au moins un enlèvement électrochimique et au moins un enlèvement mécanique, **caractérisé en ce qu'**un enlèvement mécanique est effectué avant l'enlèvement électrochimique dans la zone d'intersection (2), et **en ce que** l'enlèvement mécanique est effectué de telle sorte qu'une couche marginale formée par le durcissement est enlevée au moins en partie au moins par endroits, et/ou **en ce qu'**un enlèvement mécanique est effectué après l'enlèvement électrochimique dans la zone d'intersection (2), et **en ce qu'**une rugosité formée par l'enlèvement électrochimique est réduite au moins par endroits.

2. Procédé selon la revendication 1, **caractérisé en ce que** la zone d'intersection (2) est arrondie par l'enlèvement électrochimique, **en ce qu'**au moins une zone de transition (14) est prévue au bord (12) de la zone d'intersection (2), et **en ce que** l'enlèvement mécanique est effectué au moins substantiellement dans la zone de transition (14).

3. Procédé selon la revendication 1 ou 2, **caractérisé en ce que** l'enlèvement mécanique est effectué au moins en partie par rodage.

4. Procédé selon l'une quelconque des revendications 1 à 3, **caractérisé en ce que** le durcissement est effectué au moins en partie par un traitement thermique bainitique.

5. Procédé selon la revendication 4, **caractérisé en ce que** le composant métallique est formé à partir d'un matériau qui est durci par le durcissement.

6. Procédé selon l'une quelconque des revendications 1 à 5, **caractérisé en ce que** le composant métallique est configuré sous la forme d'une culasse de cylindre destinée à une pompe haute pression ou le composant est configuré pour un rail de distribution de carburant ou en tant que composant pour un injecteur.

7. Procédé selon l'une quelconque des revendications 1 à 6, **caractérisé en ce que** la zone d'intersection (2) est formée comme une zone d'intersection (2) d'une intersection de perçage.

8. Procédé selon l'une quelconque des revendications 1 à 7, **caractérisé en ce que** l'enlèvement électrochimique réalise une zone d'intersection (2) au moins partiellement en forme de trompette.
